# EUROPEAN PATENT APPLICATION

(11) **EP 3 644 528 A1**
(43) Date of publication of application: **29.04.2020**
(21) Application number: 17914372.2
(22) Date of filing: 27.09.2017
(51) Int. Cl.: H04B 10/07, H04B 10/40

(54) **MONITORING AND INDICATION SYSTEM OF OPTICAL MODULE**

(30) Priority: 21.06.2017 CN 201710475105
(71) Applicant: O-Net Communications (Shenzhen) Limited, Shenzhen, Guangdong 518000 (CN)
(72) Inventor: YI, Ye, Shenzhen Guangdong 518000 (CN); ZENG, Zhaofeng, Shenzhen Guangdong 518000 (CN)
(74) Representative: Li, Xiaolu
(86) International application number: PCT/CN2017/103682
(87) International publication number: WO 2018/233119

(57) **Abstract**

The present disclosure relates to a field of optical module technology, and in particular to a monitoring indication system of an optical module. The monitoring indication system of the optical module includes a optical module and a monitoring indication system. The optical module includes a housing, a circuit board arranged in the housing, and an unlocking pull handle arranged on a rear end of the housing. The monitoring indication system includes a monitoring unit arranged on the circuit board, an indicator light connected with the monitoring unit, and a display portion arranged on the unlocking pull handle. The display portion is communicated with the indicator light. The monitoring unit obtains a working state or an abnormal state of the optical module, and generates a corresponding indication signal. The indicator light performs a corresponding light-emitting operation according to the indication signal, and transmits outwards from the display portion. The present disclosure provides the monitoring indication system of the optical module. The indicator light is arranged on the unlocking pull handle of the optical module to obtain the working state or the abnormal state of the optical module, and correspondingly displays on the indicator light. The indicator light is very recognizable, reliable and simple in structure, and is not easily occluded, and can be applied to different types of optical modules without changing an original infrastructure of the optical module.

## Description

### TECHNICAL FIELD

The present disclosure relates to a field of optical module technology, and in particular to a monitoring indication system of an optical module.

### BACKGROUND

An optical module is composed of an optoelectronic device, a functional circuit, an optical interface, and etc.. The optoelectronic device comprises transmit and receive components. In summary, a function of the optical module is photoelectric conversion. A transmitting end converts an electric signal into an optical signal. And after transmitting through optical fibers, an receiving end converts the optical signal into the electric signal.

In a data center, a number of optical module products used is large, and lines are complicated. If there is a problem with one of the optical module products in use, it is troublesome to check. If the optical module has obvious module status indication which makes a skilled person in the field to intuitively understand whether the optical module in a certain work is normal or not at a long distance, which will greatly improves a troubleshooting efficiency.

Generally, an indicator light is arranged in an interior of a housing of the optical module or the indicator light is arranged on a portion that protrudes outwardly from the housing to monitoring the module status. However, the above-mentioned indicator light is not well recognized. In addition, the portion that protrudes outwardly from the housing of various optical module is very short, and further, an end of the housing usually has a cable extension, or the absolute portion is blocked by a unlocking structure. Thus, placing the indicator light on the housing is easily blocked, or, the status monitoring indication is clearly visible only in a particular direction.

### SUMMARY

The technical problem to be solved by the present disclosure is to provide a monitoring indication system of an optical module to improve an identification of an indicator light.

The technical solution adopted by the present disclosure to solve the technical problem thereof is to provide a monitoring indication system of an optical module. The monitoring indication system of the optical module includes a optical module and a monitoring indication system. The optical module includes a housing, a circuit board arranged in the housing, and an unlocking pull handle arranged on a rear end of the housing. The monitoring indication system includes a monitoring unit arranged on the circuit board, an indicator light connected with the monitoring unit, and a display portion arranged on the unlocking pull handle. The display portion is communicated with the indicator light. The monitoring unit obtains a working state or an abnormal state of the optical module, and generates a corresponding indication signal. The indicator light performs a corresponding light-emitting operation according to the indication signal, and transmits outwards from the display portion.

Furthermore, the indicator light is a monochromatic light source. And the monochromatic light source performs a corresponding indication operation in an on/off mode.

Furthermore, the indicator light includes at least two colors of light sources. The indicator light performs a corresponding indication operation in a form of emitting light of different colors.

Furthermore, the display portion is arranged on a tail end of the unlocking pull handle, and the display portion is communicated with the indicator light by means of the light guide channel.

Furthermore, an inner side of the display portion and an inner side of the light guide channel are both made of a material having light guiding properties or fluorescence properties.

Furthermore, the light guide channel is arranged along an interior of the unlocking pull handle. Or both the display portion and the light guide channel are arranged on the outer side of the unlocking pull handle in a fitting manner.

Furthermore, the display portion is arranged on a tail end of the unlocking pull handle, and the display portion is arranged adjacent to the indicator light.

Furthermore, the monitoring unit includes a detection module and a conversion module. And each functional module of the optical module is connected with the detection module respectively. The detection module obtains a working parameter of each functional module of the optical module. The detection module obtains the working state or the abnormal state of the optical module according to the working parameter. The conversion module converts the working state or the abnormal state into the corresponding indication signal according to a predetermined instruction. The indication signal is an electric signal.

Furthermore, the indicator light includes a driving module and an illuminating light source. The driving module controls the illuminating light source to perform a corresponding illuminating operation according to the indication signal.

Furthermore, the optical module is selected from a quad small form-factor pluggable (QSFP) optical module, a QSFP + optical module, a multi-source agreement (MSA) optical module, a small form pluggable (SFP) optical module, an SFP + optical module, a gigabit small form factor pluggable (XFP) optical module, a CFP optical module, a CFP2 optical module or a CFP4 optical module.

Compared with the prior art, the present disclosure provides the monitoring indication system of the optical module. And the indicator light is arranged on the unlocking pull handle of the optical module to obtain the working state or the abnormal state of the optical module, and correspondingly displays on the indicator light. The indicator light is very recognizable, reliable and simple in structure, and is not easily occluded, and can be applied to different types of optical modules without changing an original infrastructure of the optical module.

### BRIEF DESCRIPTION OF DRAWINGS

The present disclosure will be further described below in conjunction with the accompanying drawings and embodiments, in which:
FIG. 1 is a schematic diagram showing a structure of a monitoring indication system of an optical module of the present disclosure;
FIG. 2 is a schematic diagram showing a cross-sectional structure of the monitoring indication system of the optical module of the present disclosure; and
FIG. 3 is a circuit schematic diagram of the monitoring indication system of the optical module of the present disclosure.

### DETAILED DESCRIPTION

Detailed description of embodiments of the present disclosure will be described in detail with reference to the accompanying drawings.

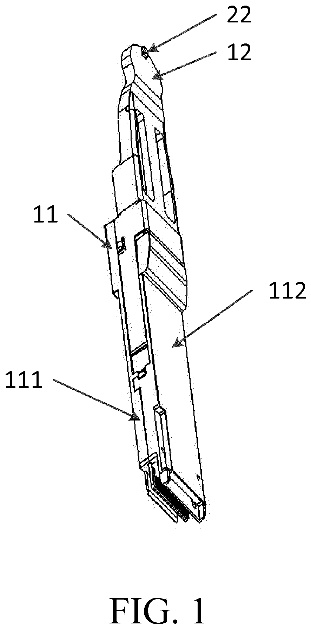

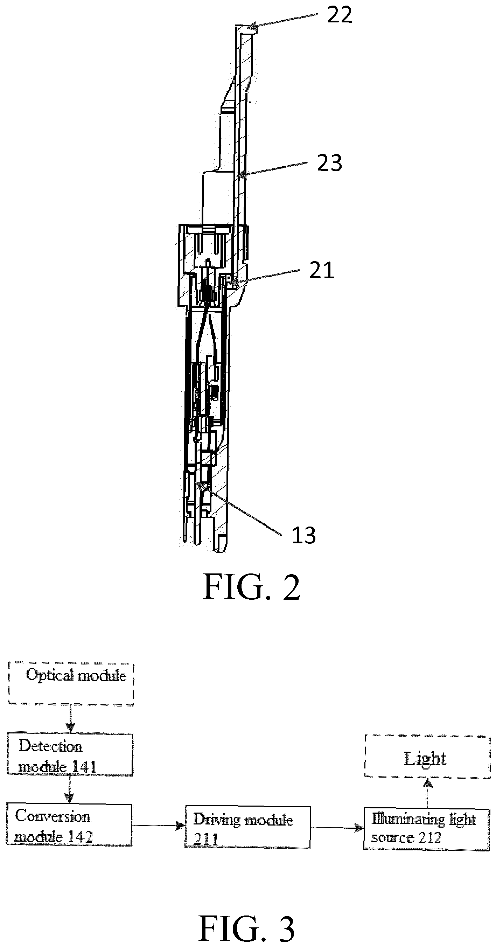

As shown in FIG. 1 and FIG. 2, the present disclosure provides an embodiment of a monitoring indication system of an optical module.

The monitoring indication system of the optical module includes a optical module and a monitoring indication system. The optical module includes a housing 11, a circuit board 13 arranged in the housing 11, and an unlocking pull handle 12 arranged on a rear end of the housing 11. The monitoring indication system includes a monitoring unit arranged on the circuit board 13, an indicator light 21 connected with the monitoring unit, and a display portion 22 arranged on the unlocking pull handle 12. The display portion 22 is communicated with the indicator light 23. The monitoring unit obtains a working state or an abnormal state of the optical module, and generates a corresponding indication signal. The indicator light 21 performs a corresponding light-emitting operation according to the indication signal, and transmits outwards from the display portion 22.

Furthermore, the optical module is selected from a quad small form-factor pluggable (QSFP) optical module, a QSFP + optical module, a multi-source agreement (MSA) optical module, a small form pluggable (SFP) optical module, an SFP + optical module, a gigabit small form factor pluggable (XFP) optical module, a CFP optical module, a CFP2 optical module or a CFP4 optical module.

To be specific, The housing 11 includes an upper housing 111 and a lower housing 112. The circuit board 13 is arranged between the upper housing 111 and the lower housing 112. The indicator light 21 is connected with the monitoring unit through a wire. And the indicator light 21 is arranged on an outside of a through hole of the unlocking pull handle 12. Or, the indicator light 21 is arranged in the through hole of the unlocking pull handle 12. The display portion 22 is arranged on a tail end of the unlocking pull handle 12, and the display portion 22 communicates with the indicator light 21 through a light guide channel 23. Alternatively, the indicator light 21 is connected with the monitoring unit through the wire, and the indicator light 21 is arranged on the display portion 22.

Furthermore, the unlocking pull handle 12 includes an unlocking handle arranged between the upper housing 111 and the lower housing 112 and a pull handle arranged on an end of the unlocking handle. The unlocking handle is usually a sheet metal part, and may have other forms such as die castings, integral plastic parts, etc. depending on the design. The housing 11 is controlled by a guide groove between the upper housing 111 and the lower housing 112 and its outer contour to slide back and forth and unlock. A return spring is arranged between the lower housing 112 and the unlocking handle, and the unlocking handle is generally in a locked state. The pull handle is usually a plastic piece, which is connected to the unlocking handle by an encapsulation process. Operators unlock the optical module by pulling the unlocking handle to pull the optical module out of a cage.

In the embodiment, the indicator light 21 includes two preferred embodiments.

In one embodiment, the indicator light 21 is a monochromatic light source. And the monochromatic light source performs a corresponding indication operation in an on/off mode. For example, the indicator light 21 is a white light emitting diode (LED) light, and different modes of display are performed according to different working states or abnormal states, such as blinking, flashing, slow flashing, interval flashing, always lighting and etc.

In one embodiment, the indicator light 21 includes at least two colors of light sources. The indicator light 21 performs a corresponding indication operation in a form of emitting light of different colors. For example, the indicator light 21 includes three colors of red, green and yellow LED lights, and displays different ways according to different working states or abnormal states. For example. the indicator light 21 emits green light in the working state, emits yellow light in the abnormal states, and emits red light in an emergency state.

Furthermore, the indicator light 21 with different light source is able to display different blinking modes on the basis of displaying different colors.

In one embodiment, an inner side of the display portion 22 and an inner side of the light guide channel 23 are both made of a material having light guiding properties or fluorescence properties. Furthermore, the light guide channel 23 is arranged along an interior of the unlocking pull handle 12. Or both the display portion 22 and the light guide channel 23 are arranged on the outer side of the unlocking pull handle 12 in a fitting manner.

Furthermore, he display portion 22 further includes a transparent cover arranged on the end of the unlocking handle 12 to prevent dust from entering the interior of the optical module from the display portion 22.

As shown in FIG. 3, the present disclosure provides one embodiment of a circuit of the monitoring indication system of the optical module.

Furthermore, the display portion is arranged on a tail end of the unlocking pull handle, and the display portion is arranged adjacent to the indicator light.

In the embodiment, the monitoring unit includes a detection module 141 and a conversion module 142. And each functional module of the optical module is connected with the detection module 141 respectively. The detection module 141 obtains a working parameter of each functional module of the optical module. The detection module 141 obtains the working state or the abnormal state of the optical module according to the working parameter. The conversion module 142 converts the working state or the abnormal state into the corresponding indication signal according to a predetermined instruction. The indication signal is an electric signal.

To be specific, the monitoring unit includes a storage unit. And the storage unit stores related parameters of the working state or the abnormal state, and indication signals corresponding to various working states or abnormal states. Each functional module of the optical module is connected with the detection module 141 respectively. The detection module 141 obtains a working parameter of each functional module of the optical module. The monitoring unit compares the obtained working parameters with the stored related parameters, and uses the working state or the abnormal state corresponding to a closest related parameter as the working state or abnormal state of the current optical module. The conversion module 142 converts the working state or the abnormal state into a corresponding indication signal according to a predetermined instruction.

Furthermore, the indicator light 21 includes a driving module 211 and an illuminating light source 212. The driving module 211 controls the illuminating light source 212 to perform a corresponding illuminating operation according to the indication signal.

The above content is a further detailed description of the present disclosure in conjunction with the specific preferred embodiments, and the specific implementation of the present disclosure is not limited to the description. It will be apparent that equivalent changes or modifications made in accordance with the scope of the present disclosure, which should be considered as being within the scope of the present disclosure.

## Claims

1. A monitoring indication system of an optical module, comprising a optical module and a monitoring indication system; wherein the optical module comprises a housing, a circuit board arranged in the housing, and an unlocking pull handle arranged on a rear end of the housing; the monitoring indication system comprises a monitoring unit arranged on the circuit board, an indicator light connected with the monitoring unit, and a display portion arranged on the unlocking pull handle; the display portion is communicated with the indicator light;
wherein the monitoring unit obtains a working state or an abnormal state of the optical module, and generates a corresponding indication signal; the indicator light performs a corresponding light-emitting operation according to the indication signal, and transmits outwards from the display portion.

2. The monitoring indication system of the optical module according to claim 1, wherein the indicator light is a monochromatic light source, and the monochromatic light source performs a corresponding indication operation in an on/off mode.

3. The monitoring indication system of the optical module according to claim 1, wherein the indicator light comprises at least two colors of light sources; the indicator light performs a corresponding indication operation in a form of emitting light of different colors.

4. The monitoring indication system of the optical module according to any claims 1-3, wherein the display portion is arranged on a tail end of the unlocking pull handle, and the display portion is communicated with the indicator light by means of the light guide channel.

5. The monitoring indication system of the optical module according to claim 4, wherein an inner side of the display portion and an inner side of the light guide channel are both made of a material having light guiding properties or fluorescence properties.

6. The monitoring indication system of the optical module according to claim 4., wherein the light guide channel is arranged along an interior of the unlocking pull handle; or both the display portion and the light guide channel are arranged on an outer side of the unlocking pull handle in a fitting manner.

7. The monitoring indication system of the optical module according to any claims 1-3, wherein the display portion is arranged on a tail end of the unlocking pull handle, and the display portion is arranged adjacent to the indicator light.

8. The monitoring indication system of the optical module according to claim 1, wherein the monitoring unit comprises a detection module and a conversion module; and each functional module of the optical module is connected with the detection module respectively; the detection module obtains a working parameter of each functional module of the optical module; and the detection module obtains the working state or the abnormal state of the optical module according to the working parameter; the conversion module converts the working state or the abnormal state into the corresponding indication signal according to a predetermined instruction; the indication signal is an electric signal.

9. The monitoring indication system of the optical module according to claim8, wherein the indicator light comprises a driving module and an illuminating light source; the driving module controls the illuminating light source to perform a corresponding illuminating operation according to the indication signal.

10. The monitoring indication system of the optical module according to claim 1, wherein the optical module is selected from a quad small form-factor pluggable (QSFP) optical module, a QSFP + optical module, a multi-source agreement (MSA) optical module, a small form pluggable (SFP) optical module, an SFP + optical module, a gigabit small form factor pluggable (XFP) optical module, a CFP optical module, a CFP2 optical module or a CFP4 optical module.
